# EUROPEAN PATENT SPECIFICATION

(11) **EP 2 652 362 B1**
(45) Date of publication and mention of the grant of the patent: **18.03.2015**
(21) Application number: 10798732.3
(22) Date of filing: 15.12.2010
(51) Int. Cl.: F16H 61/02, G01G 19/08, G01G 19/12, F16H 59/16

(54) **A METHOD FOR SELECTING A STARTING GEAR**
VERFAHREN ZUR AUSWAHL EINES ANLASSERZAHNKRANZES
PROCÉDÉ POUR SÉLECTIONNER UN RAPPORT DE DÉMARRAGE

(43) Date of publication of application: 23.10.2013
(73) Proprietor: Volvo Lastvagnar AB, 405 08 Göteborg (SE)
(72) Inventor: SÖDERSTRÖM, Johan, SE-424 71 Olofstorp (SE); LUNDGREN, Edvard, SE-417 29 Göteborg (SE)
(74) Representative: Jönrup, Emil
(86) International application number: PCT/EP2010/007646
(87) International publication number: WO 2012/079599

(56) References cited:
- DE-A1- 19 741 451
- DE-A1-102004 015 966
- DE-A1-102005 011 271
- JP-A- 62 014 025
- US-A- 5 086 656
- US-A1- 2003 040 885
- US-A1- 2006 148 615
- US-A1- 2008 281 494

## Description

### TECHNICAL FIELD

The present invention relates to the field of drivetrains of vehicles, and more particularly, to a method for controlling and improving a selection of a starting gear of a vehicle, especially a utility vehicle.

### BACKGROUND ART

Today many of the utility vehicles with an automated or automatic transmission are provided with a system for calculating the vehicle mass during driving. A starting gear for the transmission is selected dependent on the calculated vehicle mass during driving. Since the mass of the vehicle is calculated during launch and driving of the vehicle, the selection of the starting gear is made based on the assumption that the mass of the vehicle has not been changed. Today, if these vehicles are loaded during a stand still, the starting gear is still selected dependent on the last calculated vehicle mass during driving, whereby an inappropriate starting gear will be used.

A weakness of using the above mentioned method for selecting a starting gear is that it may result in poor start ability of the vehicle, when an inappropriate starting gear is chosen. This is especially a problem when the mass of the vehicle is increasing during a standstill of the vehicle, i.e. when the vehicle is loaded and a too high launching gear is selected. A too high launching gear results in added and unnecessary wear of the clutch, poor comfort and poor stability and could even result in a failed start attempt which causes an engine stop. This is mainly a problem for utility vehicles carrying great loads and which are continuously loaded and unloaded, for example dumpers.

A solution to the aforementioned problems is vehicles provided with sensors for determining the load state of the vehicle, for example vehicles with air suspension provided with sensors or sensors sensing the load on a load carrying area of the vehicle. However these known solutions include expensive, additional sensors and air suspension and increase the production price of the vehicle. Further, in rough environments the accuracy and correct function of these sensors cannot always be guaranteed, wherein maintenance and repairs of said sensors must be performed.

The closest prior art document is US 2008/281494 and discloses a method for selecting a starting gear in a transmission.

There is a need for improving the selection of a starting gear of a vehicle and removing the above mentioned disadvantages.

### DESCRIPTION OF THE INVENTION

The object of the present invention is to suggest an inexpensive, easy to implement solution for improving a selection of a starting gear of a vehicle. The present invention is defined by the appended independent claim. Various examples of the invention are set forth by the appended dependent claims as well as by the following description and the accompanying drawing.

The invention is based on the fact that when a mass is loaded on to a load carrying area of a vehicle, vibrations propagates in the body of the vehicle. By sensing and registering these vibrations a loading of the vehicle can be determined, whereby the selection of a starting gear can be adjusted in dependence of the characteristics of the vibration.

With the above introduction in mind, an aspect of the present invention is to provide a method for selecting a starting gear and then be able to select the appropriate starting gear, whereby one or more of the above-identified deficiencies in the art is mitigated, and/or eliminate.

The object of the present invention is to provide an inventive method for determining if a vehicle is getting loaded, and then be able to select a more appropriate starting gear where previously mentioned problems are avoided.

The object is achieved by the features of claim 1, in which a method for selecting a starting gear in a transmission of a vehicle is provided, wherein the vehicle is provided with a vibration sensor and a system for calculating the mass of the vehicle during driving, and whereby a starting gear of the transmission is automatically chosen dependent on the calculated mass of the vehicle, and wherein the method comprises the step of;
- sensing a vibration in the body of the vehicle, and
- altering said automatically chosen starting gear in dependence of said sensed vibration.

The vibration sensor is preferably an inclination sensor provided in the transmission. Obviously any other suitable vibration detection means can be used. However it is beneficial to use the inclination sensor of the transmission, since it is already provided in the vehicle.

The inventive method detects a loading operation of the vehicle and is then able to select a more appropriate starting gear for launch of the vehicle. A loading of the vehicle, and thereby increase in the vehicle mass is detected and determined by using a vibration sensor. Whereby, a previous selected starting gear, selected dependent of a previous calculation of the vehicle mass, is changed. The vibration registrations made by the vibration sensor are due to the vibrations caused when a load is loaded on to the vehicle. Normally the load is loaded on to a load carrying area on the vehicle. The load carrying area is for example a load carrying bridge.

The vibration sensor may be an accelerometer. The vibration sensor preferably registers the characteristics of the vibrations. The sensitivity of the vibration sensor is dependent on and adapted to the position of the vibration sensor in the vehicle. Dependent of where on the vehicle the vibration sensor is located the characteristics of the registered vibration will be different.

The method can make use of several vibration sensors provided in the vehicle in order to provide a more accurate reading of the loading. Whereby more accurate and reliable information of which launching gear that shall be used results in better comfort and stability, better start ability and less wear of the clutch. The position of the vibration sensor or vibration sensors on the vehicle can be modified. The type of vibration sensor or vibration sensors may be adapted in order to meet specific requirements, such as specific vehicle requirements, specific load requirements, specific amplitude requirements or the like.

During loading of the vehicle, the vibration sensor provides an output signal due to the fact that there are vibrations in the vehicle which are registered by the vibration sensor. This is used in the inventive method to make the assumption that the vehicle has been loaded and the mass of the vehicle has increased. Thereby the starting gear is adjusted, i.e. a lower starting gear than before loading of the vehicle is selected. By altering the starting gear, the inventive method reduces clutch wear because failed launches and long slippage times, in order to compensate for a too high gear, are avoided.

The method is preferably just executed if the during driving calculated mass has indicated a starting gear adapted for a low vehicle mass. However, if the during driving calculated mass has indicated a starting gear adapted for a high vehicle mass, the principle of the inventive method can be used to indicate that the mass of the vehicle has decreased, whereby the starting gear of the vehicle can be appropriately adjusted.

According to a further aspect of the invention, said method further comprises the step of determining that the ignition is on. According to another advantageous aspect of the invention, said method further comprises the step of determining that the vehicle is standing still. If the method is executed only when the ignition is on, the ECU performing the method and the sensor needed in the method do not have to be current carrying all the time. Further, by just executing the method when the vehicle is standing still vibrations derived from a driving operation of the vehicle is excluded, i.e. uneven driving surface, gear changes, etc.

According to a further advantageous aspect of the invention, said method further comprises the step of determining that an engine speed is essentially constant. A constant engine speed assures that the vibrations registered by the vibrations sensor does not derive from a speeding and/or accelerating engine.

According to a further advantageous aspect of the invention, said method further comprises the step of determining that an essentially constant braking force is applied on the braking means by the operator. A constant braking force applied on a braking pedal or an applied parking brake, together with a registered vehicle stand still, signals that the operator intends to keep the vehicle in a desired position, wherein a standstill of the vehicle is assumed.

According to a further advantageous aspect of the invention, said method further comprises the step of determining that the mass of the vehicle is calculated to be equal or close to an unloaded vehicle. Thus, the method may comprise the step of determining that the vehicle weight is low, i.e. that the vehicle mass is equal or close to the vehicle mass of an unloaded vehicle, before the stop of the vehicle. This, since if the vehicle already is substantially fully loaded a low starting gear probably already is selected as a starting gear and another loading of the vehicle is not likely.

According to a further advantageous aspect of the invention, said method further comprising the steps of sensing the characteristics of a vibration, analysing the characteristics of the vibration, and thereby just choosing a lower starting gear if, it is determined that the amplitude of the vibration is higher than a predefined threshold value. Thus, a predefined threshold value for the amplitude of the vibration may be set for the vibration sensor. By defining a threshold value over which the amplitude of the registered vibration must reach, vibrations caused by other external sources than a loading of the vehicle can be excluded. Such sources might be an operator getting in or out of the vehicle, another vehicle passing by or a gust of wind hitting the vehicle. Obviously, also the predefined threshold value is dependent on where on the vehicle the vibrations sensor is positioned. The characteristics of the vibrations sensed and determined during loading may be analyzed, and by using predefined threshold values the registered information of the characteristics of the vibrations may be used to select appropriate staring gear.

According to a further advantageous aspect of the invention, said method further comprising the steps of analysing the characteristics of the vibration, and thereby just choosing a lower starting gear if, it is determined that a first peak of the vibration is directed in a predefined direction. The predefined direction of the first peak of the vibration is dependent of where the vibration sensor is located on the vehicle. When using the inclination sensor of the transmission as the vibration sensor said predefined direction is probably downwards.

According to a further advantageous aspect of the invention, said method further comprising the steps of analysing the characteristics of the vibration, and just choosing a lower starting gear if, it is determined that the vibration has a diminishing characteristic. A diminishing characteristic of the vibration indicates that the vibration is caused by a force impulse. Thereby, vibrations from a passing train at a train crossing or from transport of the vehicle onboard a ship can be excluded.

Further, the method may comprise a step for saving the characteristics of the vibration and connecting the chosen starting gear to said saving. If the starting gear used shows to be appropriate, the specific characteristics of the vibration can thereafter be associated with that specific starting gear. The characteristics are alternatively saved and a calculation of the mass of the vehicle during the next launch of the vehicle is made, whereby the change of mass of the vehicle can be calculated.

A fingerprint for a specific load and a specific vehicle can be created according to any of the two methods mentioned above, whereby the next time a vibration with equal or similar characteristics is registered for that vehicle, the appropriate starting gear can be chosen by comparison with the saved fingerprints. Such a fingerprint is obviously individual for each vehicle, and is among others dependent on the inertia of the vehicle, and of how sensitive the sensor is.

The characteristics of the vibration comprise at least the amplitude and the frequency of the vibration.

All of the advantageous features of the present invention above may be combined in any suitable way.

A number of advantages are provided by means of the present invention, for example:
- A method for starting gear adjustment, which is easy and inexpensive to implement on existing as well as new vehicles.
- No additional hard ware is necessary on the vehicle to implement the inventive method.
- Less clutch wear and increased launch comfort, due to the use of an appropriate starting gear.

### BRIEF DESCRIPTION OF THE DRAWINGS

The present invention will now be described in detail with reference to the figure, wherein:

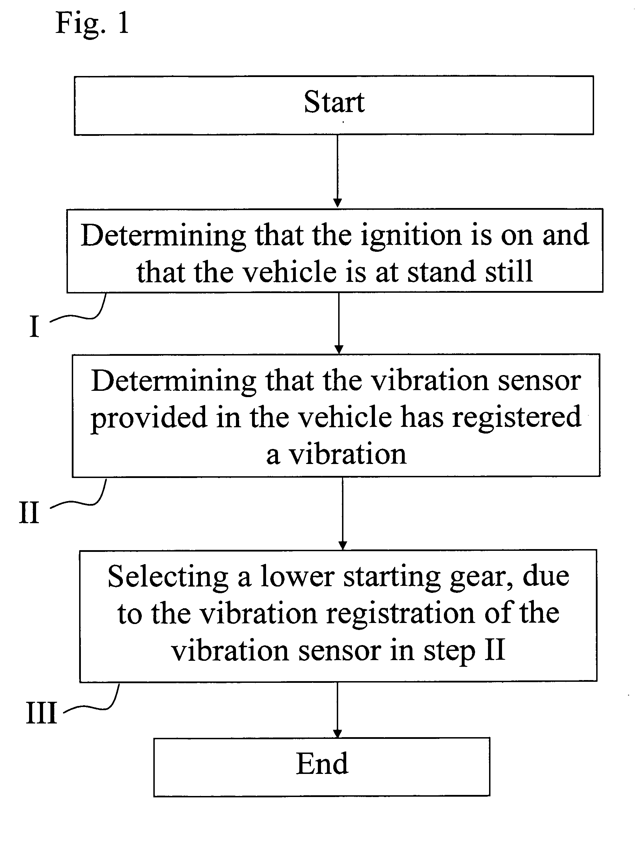

Figure 1 shows a flow chart of an embodiment of the inventive method.

### DETAILED DESCRIPTION OF THE DRAWING

One embodiment of the present invention will be described more fully hereinafter with reference to the accompanying drawing, in which a flow chart of the inventive method is shown. This invention may, however, be embodied in many different forms and should not be construed as limited to the example set forth herein. Rather, this example is provided so that this disclosure will be thorough and complete, and will fully convey the scope of the invention to those skilled in the art. Thus, in the following only one embodiment of the invention is shown and described, simply by way of illustration of one mode of carrying out the invention.

Figure 1 schematically shows a flowchart of an embodiment of a method according to the present invention of selecting a starting gear of a vehicle. Hereinafter, referring to figure 1, the method according to a preferred embodiment of the present invention is explained in detail.

The method may start with first, determining that the ignition of the vehicle is on and that the vehicle is at stand still (step I). To assure that the vehicle really is at stand still, information about the vehicle speed, engine speed, and/or braking force can be used.

Then, determining that the vibration sensor provided in the vehicle has registered a vibration of the vehicle (step II). The vibration is analysed, such that it can be determined that the vibration is derived from a loading of the vehicle. One or a plurality of different criteria for the vibration can be used in order to determine a correct origin of the vibration. These criteria are among others; general characteristics, height of amplitude, frequency, dismissing or constant vibrations and/or direction of first peak of the vibration.

Finally, a lower starting gear is selected, if it is determined that the vibration is derived from a loading operation of the vehicle (step III). Due to this inventive method the during driving calculated starting gear is adjusted, whereby the vehicle can be launched with an appropriate starting gear, directly after a loading operation, without any failed launching attempts.

The present invention may be used for any type of vehicle such as utility vehicles, trucks, dumpers, passenger cars or the like. Further, the effect of the inventive method is highest, when the inventive method is used in vehicles with leaf suspension having automated or automatic transmission provided with an inclination sensor. However, it is also possible to implement the method in vehicles having other means to detect a loading of the vehicle, such as vehicles adapted with air suspension. The invention is not limited to the example described above, but may be modified without departing from the scope of the claims below.

As will be realised, the invention is capable of modification in various obvious respects, all without departing from the scope of the appended claims. Accordingly, the drawing and the description thereto are to be regarded as illustrative in nature, and not restrictive.

## Claims

1. Method for selecting a starting gear in a transmission, wherein the vehicle is provided with a vibration sensor and a system for calculating the mass of the vehicle during driving, and whereby a starting gear of the transmission is automatically chosen dependent on the calculated mass of the vehicle, and wherein the method comprises the step of;
• sensing a vibration of the vehicle, and
• altering said automatically chosen starting gear in dependence of said sensed vibration.

2. Method according to claim 1, wherein said altering comprises a lowering of said automatically chosen starting gear.

3. Method according to claim 1 or 2, wherein the method further comprises the step of;
• determining that the ignition is on.

4. Method according to any of the preceding claims, wherein the method further comprises the step of;
• determining that an engine speed is essentially constant.

5. Method according to any of the preceding claims, wherein the method further comprises the step of;
• determining that the vehicle is at stand still.

6. Method according to any of the preceding claims, wherein the method further comprises the step of;
• determining that an essentially constant braking force is applied on the braking means.

7. Method according to any of the preceding claims, wherein the method further comprises the step of;
• determining that the during driving calculated mass of the vehicle is calculated to be equal or close to an unloaded vehicle.

8. Method according to any of the preceding claims, further comprising the steps of;
• sensing a characteristics of the vibration,
• analysing the characteristics of the vibration, and thereby
• just choosing a lower starting gear if, it is determined that the amplitude of the vibration is higher than a predefined threshold value.

9. Method according to any of the preceding claims further comprising the steps of;
• analysing the characteristics of the vibration, and thereby
• just choosing a lower starting gear if, it is determined that a first peak of the vibration is directed in a predefined direction.

10. Method according to claim 9, wherein the predefined direction is downwards.

11. Method according to any of the preceding claims, further comprising the steps of;
• analysing the characteristics of the vibration, and
• just choosing a lower starting gear if, it is determined that the vibration has a diminishing characteristic.

12. Method according to any of the claims 8-11, and if a launch of the vehicle is successful, the method further comprising the steps of;
• saving the characteristics of a vibration, and
• connect said saving with the chosen starting gear.

13. Method according to claim 12, further comprising the steps of;
• comparing the characteristics of a sensed vibration with said saved characteristics of a vibration,
• selecting the same starting gear connected with said saved characteristics of a vibration, if the characteristics of said sensed vibration is equal or similar to the characteristics of said saved vibration.

## Patentansprüche

1. Verfahren zur Wahl eines Startgangs in einem Getriebe, wobei das Fahrzeug mit einem Vibrationssensor und einem System zum Berechnen der Fahrzeugmasse während der Fahrt versehen ist, und wobei ein Startgang des Getriebes abhängig von der berechneten Fahrzeugmasse automatisch gewählt wird, und wobei das Verfahren die Schritte umfasst:
• Erfassen einer Vibration des Fahrzeugs, und
• Ändern des automatisch gewählten Startgangs in Abhängigkeit von der erfassten Vibration.

2. Verfahren nach Anspruch 1, bei dem das Ändern ein Erniedrigen des automatisch gewählten Startgangs umfasst.

3. Verfahren nach Anspruch 1 oder 2, bei dem das Verfahren weiterhin den Schritt umfasst:
• Bestimmen, dass die Zündung eingeschaltet ist.

4. Verfahren nach irgendeinem der vorhergehenden Ansprüche, bei dem das Verfahren weiterhin den Schritt umfasst:
• Bestimmen, dass eine Motordrehzahl im Wesentlichen konstant ist.

5. Verfahren nach irgendeinem der vorhergehenden Ansprüche, bei dem das Verfahren weiterhin den Schritt umfasst:
• Bestimmen, dass sich das Fahrzeug im Stillstand befindet.

6. Verfahren nach irgendeinem der vorhergehenden Ansprüche, bei dem das Verfahren weiterhin den Schritt umfasst:
• Bestimmen, dass an die Bremseinrichtung eine im Wesentlichen konstante Bremskraft angelegt wird.

7. Verfahren nach irgendeinem der vorhergehenden Ansprüche, bei dem das Verfahren weiterhin den Schritt umfasst:
• Bestimmen, dass die während der Fahrt berechnete Masse des Fahrzeugs so berechnet wird, dass sie gleich oder nahe an einem unbeladenen Fahrzeug ist.

8. Verfahren nach irgendeinem der vorhergehenden Ansprüche, das weiterhin die Schritte umfasst:
• Erfassen einer Kennlinie der Vibration,
• Analysieren der Kennlinie der Vibration und dabei
• nur dann Wählen eines niedrigeren Startgangs, wenn bestimmt wird, dass die Vibrationsamplitude höher ist als ein vordefinierter Schwellenwert.

9. Verfahren nach irgendeinem der vorhergehenden Ansprüche, das weiterhin die Schritte umfasst:
• Analysieren der Kennlinie der Vibration und dabei
• nur dann Wählen eines niedrigeren Startgangs, wenn bestimmt wird, dass eine erste Vibrationsspitze in eine vorbestimmte Richtung gerichtet ist.

10. Verfahren nach Anspruch 9, bei dem die vorbestimmte Richtung abwärts ist.

11. Verfahren nach irgendeinem der vorhergehenden Ansprüche, das weiterhin die Schritte umfasst:
• Analysieren der Kennlinie der Vibration und
• nur dann Wählen eines niedrigeren Startgangs, wenn bestimmt wird, dass die Vibration eine abnehmende Kennlinie hat.

12. Verfahren nach irgendeinem der Ansprüche 8 bis 11 und bei dem, wenn ein Starten des Fahrzeugs erfolgreich ist, das Verfahren weiterhin die Schritte umfasst:
• Speichern der Kennlinie einer Vibration, und
• Verbinden des Gespeicherten mit dem gewählten Startgang.

13. Verfahren nach Anspruch 12, das weiterhin die Schritte umfasst:
• Vergleichen der Kennlinie einer erfassten Vibration mit der gespeicherten Kennlinie einer Vibration,
• Wählen des gleichen Startgangs, der mit der gespeicherten Kennlinie einer Vibration verbunden ist, wenn die Kennlinie der erfassten Vibration gleich oder ähnlich der Kennlinie der gespeicherten Vibration ist.

## Revendications

1. Procédé pour sélectionner un rapport de démarrage dans une transmission, dans lequel le véhicule est équipé d'un capteur de vibration et d'un système pour calculer la masse du véhicule pendant la conduite, et moyennant quoi un rapport de démarrage de la transmission est automatiquement choisi en fonction de la masse calculée du véhicule, et dans lequel le procédé comprend les étapes qui consistent :
• à détecter une vibration du véhicule, et
• à modifier ledit rapport de démarrage automatiquement choisi en fonction de ladite vibration détectée.

2. Procédé selon la revendication 1, dans lequel ladite étape de modification comprend l'abaissement dudit rapport de démarrage automatiquement choisi.

3. Procédé selon la revendication 1 ou 2, dans lequel le procédé comprend en outre l'étape qui consiste :
• à déterminer que l'allumage est enclenché.

4. Procédé selon l'une des revendications précédentes, dans lequel le procédé comprend en outre l'étape qui consiste :
• à déterminer qu'une vitesse de moteur est essentiellement constante.

5. Procédé selon l'une des revendications précédentes, dans lequel le procédé comprend en outre l'étape qui consiste :
• à déterminer que le véhicule est à l'arrêt.

6. Procédé selon l'une des revendications précédentes, dans lequel le procédé comprend en outre l'étape qui consiste :
• à déterminer qu'une force de freinage essentiellement constante est appliquée sur le moyen de freinage.

7. Procédé selon l'une des revendications précédentes, dans lequel le procédé comprend en outre l'étape qui consiste :
• à déterminer que la masse calculée pendant la conduite du véhicule est calculée de façon à être égale à, ou proche de, celle d'un véhicule non chargé.

8. Procédé selon l'une des revendications précédentes, comprenant en outre les étapes qui consistent :
• à détecter des caractéristiques de la vibration,
• à analyser les caractéristiques de la vibration, et ainsi
• à ne choisir un rapport de démarrage plus bas que s'il est déterminé que l'amplitude de la vibration est supérieure à une valeur seuil prédéfinie.

9. Procédé selon l'une des revendications précédentes, comprenant en outre les étapes qui consistent :
• à analyser les caractéristiques de la vibration, et ainsi
• à ne choisir un rapport de démarrage plus bas que s'il est déterminé qu'une première crête de la vibration est orientée dans une direction prédéfinie.

10. Procédé selon la revendication 9, dans lequel la direction prédéfinie est vers le bas.

11. Procédé selon l'une des revendications précédentes, comprenant en outre les étapes qui consistent :
• à analyser les caractéristiques de la vibration, et
• à ne choisir un rapport de démarrage plus bas que s'il est déterminé que la vibration a une caractéristique décroissante.

12. Procédé selon l'une des revendications 8 à 11, et si un lancement du véhicule est réussi, le procédé comprenant en outre les étapes qui consistent :
• à sauvegarder les caractéristiques d'une vibration, et
• à associer ladite sauvegarde au rapport de démarrage choisi.

13. Procédé selon la revendication 12, comprenant en outre les étapes qui consistent :
• à comparer les caractéristiques d'une vibration détectée auxdites caractéristiques sauvegardées d'une vibration,
• à sélectionner le même rapport de démarrage associé auxdites caractéristiques sauvegardées d'une vibration, si les caractéristiques de ladite vibration détectée sont égales ou similaires aux caractéristiques de ladite vibration sauvegardée.
